# EUROPEAN PATENT APPLICATION

(11) **EP 0 707 417 A2**
(43) Date of publication of application: **17.04.1996**
(21) Application number: 95307023.2
(22) Date of filing: 03.10.1995
(51) Int. Cl.: H04N 3/15, H04N 9/04

(54) **An active pixel image sensor**

(30) Priority: 11.10.1994 US 321350
(71) Applicant: AT&T Corp., New York, NY 10013-2412 (US)
(72) Inventor: Dickinson, Alexander George, Neptune, New Jersey 07753 (US); Inglis, David Andrew, Long Branch, New Jersey 07740 (US); Ibrarhim Eid, El-Sayed, Freehold, New Jersey 07728 (US)
(74) Representative: Buckley, Christopher Simon Thirsk

(57) **Abstract**

An active pixel image sensor according to the invention includes multiple sensing elements (RD,GRN,BL) and active pixel circuitry (Q1,Q2,Q3) for controlling the capture and transfer of the video signals. The active pixel circuitry is shared by the multiple sensing elements. A plurality of the active pixel image sensors form an imaging array for imaging an object. Preferably, the imaging is in color.

## Description

### BACKGROUND OF THE INVENTION

### 1. Technical Field

This invention relates generally to an active pixel image sensor and more particularly to an image sensor having multiple sensing elements and shared active pixel elements.

### 2. Discussion of Related Art

An active pixel image sensor is an image sensor having one or more active gating devices within a pixel unit cell. The active gating devices are typically transistors disposed in the pixel unit cell for performing control functions such as read-out, selection and reset. To create an image of an object, an array of pixel units, each of which corresponding to a specific position of the object, replicates the object by sensing the energy present or reflected from the object. The captured information is processed to form the image.

An active pixel sensor is desirable in that the active gating elements provide ease of controls. Typically, to capture and transfer image information, the active transistors precharge the sensing element, which senses and captures the energy present at a corresponding location of the object to be imaged. After a duration of image capture, the energy information is read by gating the sensing element to the pixel unit cell output. Previously known active pixel elements include amplified MOS imager, bulk charge modulated device, and static induction transistor. An active pixel sensor that is CMOS compatible is more desirable because of the low power consumption characteristics of CMOS.

A drawback of active pixel image sensors is the larger physical size needed to house the active elements. The problem becomes more significant when there are multiple sensing elements in the sensor. For example, a color image sensor requires at least three sensing elements at each cell (assuming one sensing element for each of the red, green and blue colors) and three sets of active elements to support the corresponding sensing elements.

### SUMMARY OF THE INVENTION

The active pixel image sensor according to the present invention comprises: a plurality of sensing elements, each configured for capturing a different energy information from an object to be imaged and each being coupled through a respective gating device to first and second shared transistors; the gating device is configured for selectively connecting and isolating the respective sensing element to and from the first and second shared transistors; the first shared transistor being configured for selectively actuating the sensing elements; and the second shared transistor being configured for selectively outputting energy information captured by the sensing elements.

Preferably, the image sensor further includes a third transistor, the third transistor being connected to the second transistor in a source follower configuration.

The image sensor according to the invention may be a color sensor wherein each of the sensing elements is configured to capture one of the red, green and blue energy spectrum from the object to be imaged.

According to the present invention, a plurality of image sensors are connected to form an image sensor array, which comprises:
a plurality of active image sensors, each of the sensors including: reset and access input control lines and a sensor output line; a plurality of sensing elements, each configured for capturing a different portion of energy from an object to be imaged; a plurality of active gating elements configured for selectively gating the sensing elements and transferring energy sensed by the sensing elements, the gating elements including a separate transistor for gating each of the sensing elements; a first shared transistor being coupled to the reset line and configured for resetting the sensing elements; and a second shared transistor being coupled to the access line and configured for transferring the captured energy from the sensing elements to the sensor output line;
a controller having a first control line being commonly coupled to a plurality of the reset input lines and a second control line being commonly coupled to a plurality of the access input lines;
the controller configured for selectively activating the first and second control lines for selectively resetting and outputting the sensors; and
an amplifier being commonly coupled to a plurality of the sensor outputs for amplifying the captured energy of the sensing elements.

The image sensor array according to the invention may also include individual lines coupled to each of the gating elements for selectively turning on the gating element while the access line is actuated to output the captured energy from the respective sensing element.

Preferably, the image sensor array images the color of the object, wherein the plurality of sensing elements in each pixel image sensor capture the red, green and blue energy spectrum from the object to be imaged.

The color image sensor array are preferably aligned in a plurality of rows and columns and the controller includes a decoder configured to activate each of the rows sequentially for producing a colored image of the object.

### BRIEF DESCRIPTION OF THE DRAWINGS

The advantages of the active pixel image sensor according to the present invention will be more readily apparent in view of the following description of the preferred embodiment and the following drawings in which:
Fig. 1 shows a prior art single sensing element active pixel image sensor;
Fig. 2 shows a prior art imaging array;
Fig. 3 shows a prior art multiple sensing element active pixel image sensor;
Fig. 4 shows an active pixel image sensor according to the present invention;
Fig. 5 shows the timing diagram of the control signals for controlling the pixel image sensor of Fig. 4; and
Fig. 6 shows an imaging array comprising a plurality of the active pixel image sensors as shown in Fig. 4.

### DETAILED DESCRIPTION OF THE PREFERRED EMBODIMENT

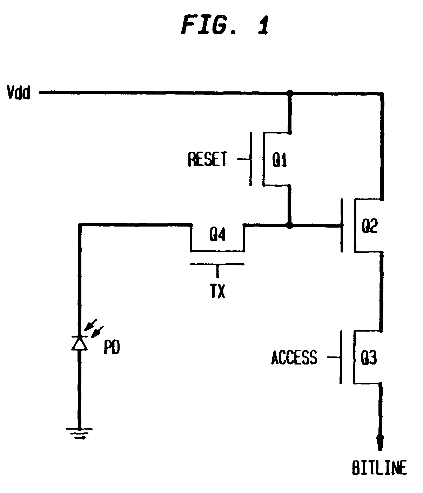

Figure 1 shows a prior art active pixel image sensor for a monochrome camera. As shown, a single sensing element PD, which may be a photodiode or a photogate, is configured to capture energy from a portion of an object to be imaged. The object may be irradiated by a light source. In operation, the sensing element PD is precharged by pulsing on transistors Q1 and Q4 to connect PD to power source Vdd. An integration period follows during which the sensing element PD collects the imaging energy reflected from the corresponding portion of the object to be imaged. The sensing element PD inherently includes capacitance to store an amount of charge proportional to the light intensity reflected from the object. To read or remove the energy from the sensing element, transistor Q4 is pulsed to transfer the captured charge to the base of transistor Q2, which is a source follower transistor to pass current proportional to the captured charge. Then, transistor Q3 is pulsed and the charge at Q2 is output to the Bitline output. Subsequently the bitline voltage is amplified to provide the video output signal.

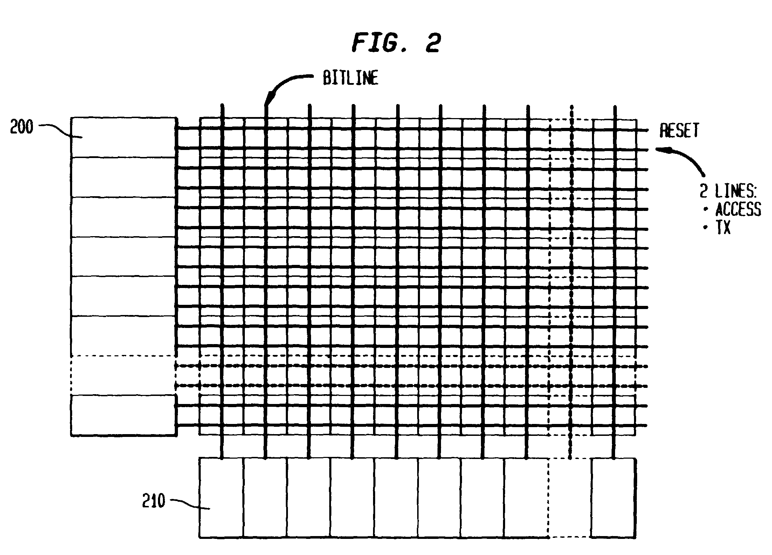

An image sensor array is formed by connecting a plurality of the active pixel image sensors as shown in Figure 1. A prior art array is shown in Figure 2. Typically, the array is aligned in a rectangular or square pattern with row decoders 200 controlling the reset, gating TX and access lines and the bitline being output vertically to output amplifiers 210. The details of the row decoders circuitry are well known to one ordinarily skilled in the art.

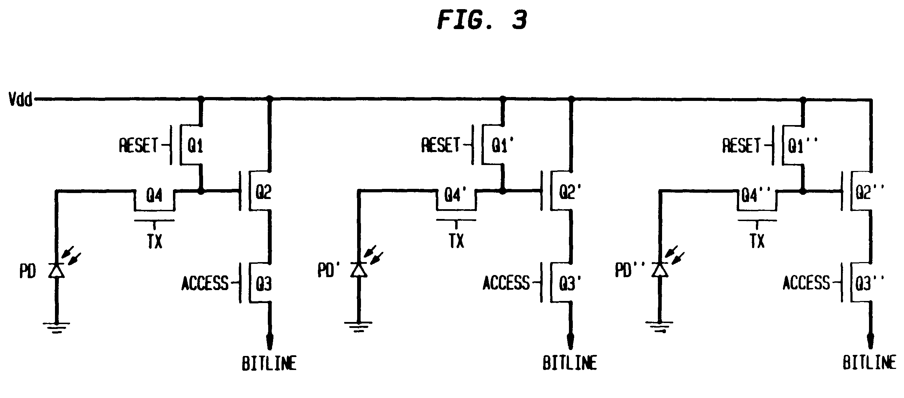

As shown in Figure 1 above, an active pixel sensor requires four transistors at each pixel site. For a color camera, at least three sensing elements are required at each color pixel site to capture the red, green and blue color spectrums. Figure 3 shows the components of a conventional active pixel color sensor site. As shown, the design requires three sensing elements and four transistors corresponding to each sensing element. A total of 12 transistors are required at each site.

In accordance with the active color pixel sensor of the present invention, the reset and source follower transistors are shared, reducing the transistor count from 12 transistors to 6 transistors per pixel site.

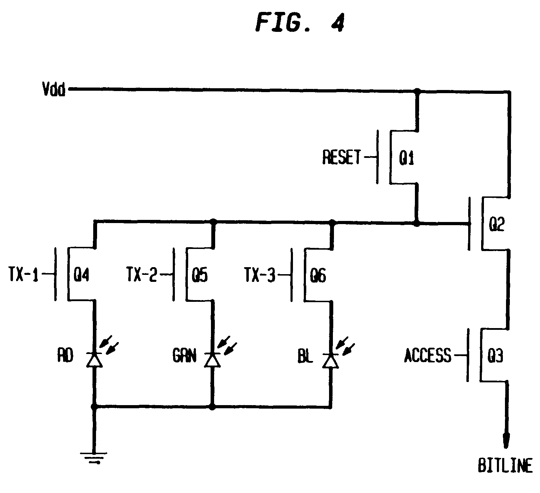

The components of the color pixel site according to the present invention is shown in Figure 4. Sensing elements RD, GRN and BL, preferably photodiodes configured for sensing or capturing the red, green and blue color spectrums, respectively, of a portion of the object to be imaged in color. The sensing elements are each connected through gating elements Q4, Q5 and Q6, respectively. Each of the sensing element/gating element pair is connected in parallel to the gate of a source follower, formed by transistors Q2 and Q3. The sensing and gating elements also connect to power source Vdd through reset transistor Q1. The transistors Q1 to Q6 are preferably CMOS transistors. It is readily apparent to one skilled in the art that bipolar transistors may also be used. In which case, the source follower mentioned above is called an emitter follower.

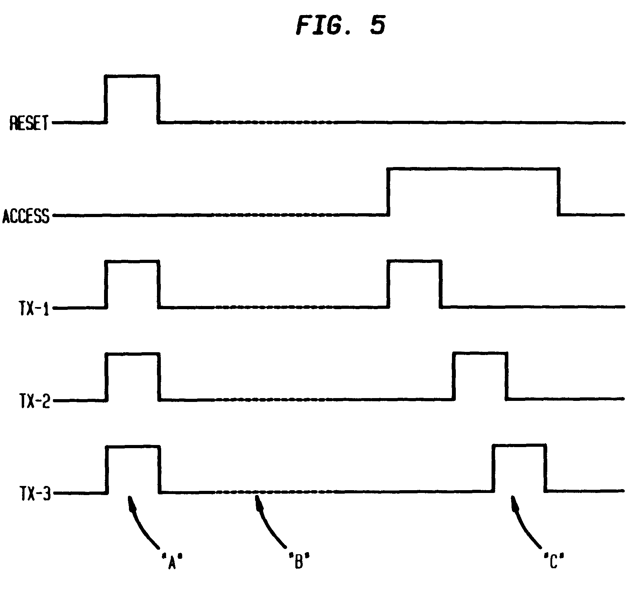

The operation of the active pixel color image sensor of Fig. 4 is described with reference to the timing diagram of Fig. 5. Each RD, GRN and BL photodiode is first pre-charged by connecting each photodiode to Vdd, by holding the reset signal high while pulsing each of the gate transistors TX1 to TX3 as shown with timing "A". During integration time period "B", a charge proportional to the captured energy level irradiated from the corresponding portion of the object is stored in each photodiode. During read out period "C", the access line is held high to turn on transistor Q3. The gate transistors Q4, Q5 and Q6 are then activated in turn by pulsing the TX-1, TX-2 and TX-3 lines. With the access line and any of the gate input lines TX-1 to TX-3 held high, any charge stored in any of the corresponding photodiodes RD, GRN and BL is passed through the source or emitter follower Q2 and Q3 of Figure 4 to the Bitline output.

Advantageously, the active pixel image sensor according to the present invention reduces the number of components required for imaging with multiple sensing elements and at the same time reduces the physical size of each pixel site. The size reduction is multiplied when an imaging array is formed by connecting a plurality of image sensors.

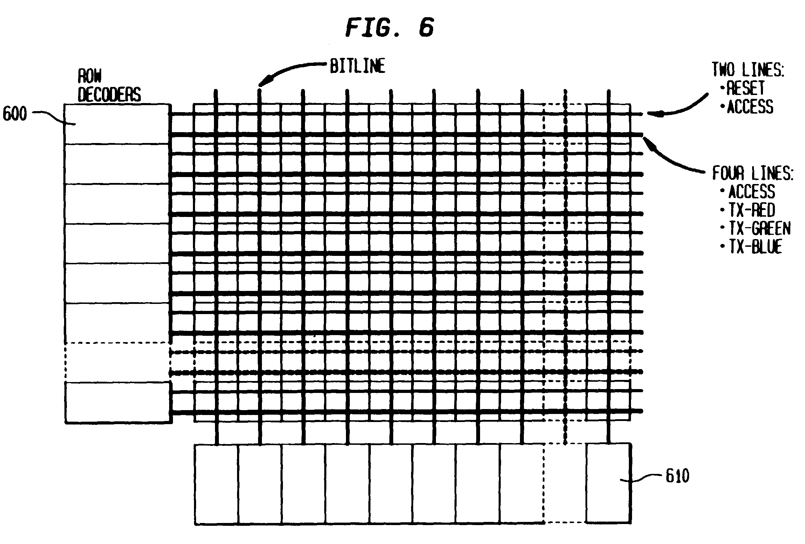

Figure 6 shows the imaging array formed by connecting a plurality of image sensors of Figure 4 in a plurality of rows and columns. A controller 600, which includes a row decoder for accessing one row at a time, controls each row of the array with control pulses activated substantially in accordance with the timing as shown in Figure 5.

The reset and access lines are common to each row of pixel sensors and there are three lines for each of the red, green and blue gating controls. The output at the Bitline output columns are connected to amplifier 610 for amplifying the video signals. The row and column being activated by the controller 600 is shown in dotted lines in Figure 6.

It is readily apparent to one ordinarily skilled in the art that the above descriptions of an active pixel image sensor according to the present invention is applicable for any active pixel image sensor having multiple sensing elements. A color active pixel image sensor is but one example of such multiple sensing element device. As another example, the technique according to the present invention may be equally applicable in a monochrome application where two rows of sensing elements share a single row of source followers to reduce the physical size of the device in a similar manner.

Accordingly, the present invention may be embodied in other specific forms without departing from the spirit or essential characteristics of the invention as indicated in the appended claims.

## Claims

1. An active pixel image sensor comprising:
a plurality of sensing elements, each configured for capturing a different energy information from an object to be imaged and each being coupled through a respective gating device to first and second shared transistors;
said gating device configured for selectively connecting and isolating said respective sensing element to and from first and second shared transistors;
said first shared transistor being configured for selectively actuating said sensing elements; and
said second shared transistor being configured for selectively outputting energy information captured by said sensing elements.

2. The image sensor according to claim 1, wherein said first and second transistors are CMOS.

3. The image sensor according to claim 1, further including a third transistor, said third transistor being connected to said second transistor in a source follower configuration.

4. The image sensor according to claim 1, wherein said second transistor, in combination with said gating devices, selectively output energy information captured by one of said sensing elements by switching on said second transistor in combination with switching on one of said gating devices corresponding to said one of said sensing elements.

5. The image sensor according to claim 1, wherein said each of said sensing elements is configured to capture one of the red, green and blue energy spectrums from said object to be imaged.

6. An image sensor array, comprising:
A. a plurality of active image sensors, each of said sensors including:
reset and access input control lines and a sensor output line;
a plurality of sensing elements, each configured for capturing a different portion of energy from an object to be imaged;
a plurality of active gating elements configured for selectively gating said sensing elements and transferring energy captured by said sensing elements, said gating elements including a separate transistor for gating each of said sensing elements;
a first shared transistor being coupled to said reset line and configured for resetting said sensing element; and
a second shared transistor being coupled to said access line and configured for transferring said captured energy from said sensing elements to said sensor output line;
B. a controller having a first control line being commonly coupled to a plurality of said reset input lines and a second control line being commonly coupled to a plurality of said access input lines;
said controller configured for selectively activating said first and second control lines for selectively resetting said sensing elements and outputting signals from said sensor; and
C. an amplifier being commonly coupled to a plurality of said sensor outputs for amplifying said captured energy of said sensing elements.

7. The image sensor array according to claim 6, wherein said controller further having individual lines coupled to each of said gating elements for selectively turning on said gating element while said access line is actuated to output said captured energy from said respective sensing element.

8. The image sensor array according to claim 6, wherein said plurality of sensing elements in each pixel image sensor capture the red, green and blue energy spectrum from said object to be imaged.

9. The image sensor array according to claim 8, wherein said plurality of active image sensors are arrayed in a plurality of rows and columns and said controller includes a decoder configured to activate each of said rows sequentially for producing a colored image of said object.

10. The image sensor array according to claim 6, wherein each of said active pixel image sensors further include a third shared transistor being connected to said second shared transistor in a source follower format.
